# EUROPÄISCHE PATENTSCHRIFT

(11) **EP 3 922 495 B1**
(45) Veröffentlichungstag und Bekanntmachung des Hinweises auf die Patenterteilung: **22.03.2023**
(21) Anmeldenummer: 21170631.2
(22) Anmeldetag: 27.04.2021
(51) Int. Cl.: B60J 1/00, B62D 49/06, B60R 11/04, B60R 1/00, A01B 59/00, A01B 63/111, B60J 1/18

(54) **LANDWIRTSCHAFTLICHES ARBEITSFAHRZEUG**
AGRICULTURAL WORK VEHICLE
VÉHICULE DE TRAVAIL AGRICOLE

(30) Priorität: 10.06.2020 DE 102020115466
(43) Veröffentlichungstag der Anmeldung: 15.12.2021
(73) Patentinhaber: CLAAS Tractor S.A.S., 78141 Vélizy-Villacoublay Cedex (FR)
(72) Erfinder: Garcia, Remi, 92260 Fontenay-Aux-Roses (FR)
(74) Vertreter: CLAAS Gruppe

(56) Entgegenhaltungen:
- EP-A1- 1 238 577
- DE-A1-102019 201 572
- ES-T3- 2 287 266
- GB-A- 1 160 005
- US-B2- 9 783 112

## Beschreibung

Die vorliegende Erfindung betrifft ein landwirtschaftliches Arbeitsfahrzeug gemäß dem Oberbegriff des Anspruches 1.

Ein landwirtschaftliches Arbeitsfahrzeug, insbesondere ein Traktor, umfassend eine Kabine, welche eine Frontscheibe und eine der Frontscheibe gegenüberliegende, ausstellbare Heckscheibe aufweist, welche durch Schwenken um eine Schwenkachse aus einer geschlossenen Stellung in eine geöffnete Stellung überführbar ist, eine Anbauvorrichtung zum Verbinden eines Arbeitsgerätes mit dem Arbeitsfahrzeug sowie ein Kamerasystem, welches zur Überwachung des Verbindungsvorganges eingerichtet ist, ist aus der DE 10 2019 201 572 A1 bekannt.

Aus der Praxis ist es bekannt, dass beim Verbinden des Arbeitsgerätes, wie einem Anbaugerät oder einer Anhängevorrichtung, mit dem Arbeitsfahrzeug eine Hilfsperson zwischen dem Arbeitsfahrzeug und dem zu verbindenden Arbeitsgerät steht, um einen Fahrer des Arbeitsfahrzeugs während des Verbindungsvorganges einzuweisen. Dies ist insbesondere bei einem schweren Anbaugerät, welches nicht mit der Hand verlagert werden kann, der Fall, um ein ungenaues Anfahren des Arbeitsfahrzeugs auszugleichen und um Kuppelelemente der Anbauvorrichtung des Arbeitsfahrzeugs mit korrespondierenden Kuppelelementen des Anbaugerätes mechanisch zu verbinden. Die Hilfsperson befindet sich dabei in einem Gefahrenbereich, wobei eine Unfallgefahr mit zunehmender Größe von Arbeitsfahrzeug sowie Arbeitsgerät wegen der zunehmenden Unübersichtlichkeit steigt.

Die DE 10 2019 201 572 A1 sieht ein Kamerasystem für das Arbeitsfahrzeug vor, welches der Überwachung des Verbindungsvorganges dient. Hierzu ist im Heckbereich des Arbeitsfahrzeugs an der Karosserie ein Kameraträger angeordnet, an welchem eine Kamera befestigt ist. Der Kameraträger ist dabei hinter der Kabine zwischen den Kotflügeln des Arbeitsfahrzeugs positioniert. Ein Objektiv der Kamera umfasst ein Sichtfeld, das ausreicht, ein Bild zu liefern, welches einen Teil der Anbauvorrichtung und einen Teil der Arbeitsgeräteverbindung umfasst. Hierzu weist die Kamera bezogen auf die Hochachse des Arbeitsfahrzeugs eine durch den Kameraträger vorgegebene Neigung von unter 90° auf.

Aus der EP1238577A1 ist ein Arbeitsfahrzeug mit einem vergleichbaren Kamerasystem bekannt, wobei die im Heckbereich des Arbeitsfahrzeugs positionierte Kamera am Kabinendach oberhalb der Anbauvorrichtung befestigt und mit ihrem Sichtfeld auf den Boden ausgerichtet ist. Auch hier weist die Kamera bezogen auf die Hochachse des Arbeitsfahrzeugs eine Neigung von unter 90° auf, d.h. die Kamera blickt von schräg oben auf die Anbauvorrichtung.

Die Schriften GB 1 160 005 A und US 9 783 112 B2 beschreiben bekannte landwirtschaftliche Arbeitsfahrzeuge.

Nachteilig an diesen Kamerasystemen gemäß dem Stand der Technik ist, dass die jeweilige Kamera in einem ungünstigen Winkel auf die Anbauvorrichtung schaut, wodurch es für den Fahrer des Arbeitsfahrzeugs trotz der von der Kamera bereitgestellten Bilder erschwert ist, den Verbindungsvorgang ohne eine außenstehende Hilfsperson zu überwachen.

Die Schrift ES 2 287 266 T3 beschreibt ein bekanntes Kamerasystem.

Der Erfindung liegt die Aufgabe zugrunde, ein Arbeitsfahrzeug der eingangs genannten Art weiterzubilden, welches die Kopplung eines Arbeitsgeräts mit dem Arbeitsfahrzeug, insbesondere die Überwachung des Verbindungsvorganges, ohne eine Hilfsperson vereinfacht.

Diese Aufgabe wird erfindungsgemäß bei einem Arbeitsfahrzeug gemäß dem Oberbegriff des Anspruches 1 durch die Merkmale des kennzeichnenden Teils von Anspruch 1 gelöst. Vorteilhafte Weiterbildungen sind Gegenstand der Unteransprüche.

Gemäß dem Anspruch 1 wird ein landwirtschaftliches Arbeitsfahrzeug, insbesondere ein Traktor, vorgeschlagen, umfassend
- eine Kabine, welche eine Frontscheibe und eine der Frontscheibe gegenüberliegende, ausstellbare Heckscheibe aufweist, welche durch Schwenken um eine Schwenkachse aus einer geschlossenen Stellung in eine geöffnete Stellung überführbar ist,
- eine Anbauvorrichtung zum Verbinden eines Arbeitsgerätes mit dem Arbeitsfahrzeug sowie
- ein Kamerasystem mit einer Steuereinheit, welches zur Überwachung des Verbindungsvorganges eingerichtet ist.

Um die Überwachung des Verbindungsvorganges zu vereinfachen, ist erfindungsgemäß vorgesehen, dass das Kamerasystem zumindest eine Kamera umfasst, welche an der Heckscheibe angeordnet ist, und dass die an der Heckscheibe angeordnete Kamera bei geöffneter Heckscheibe auf die Anbauvorrichtung ausgerichtet ist. Die Anordnung der Kamera an der Heckscheibe hat unter anderem den Vorteil, dass sich die Kamera bei geöffneter Heckscheibe im Wesentlichen in einer Position unmittelbar oberhalb der Anbauvorrichtung befindet. Zudem wird die Kamera nur bei Bedarf in ihre Überwachungsstellung überführt, d.h. beim Öffnen der Heckscheibe.

Bei der Anbauvorrichtung kann es sich insbesondere um einen Heckkraftheber und/oder eine Anhängevorrichtung handeln. Ein Heckkraftheber kann heckseitig an der Arbeitsmaschine angeordnet sein und beispielsweise in Form eines Dreipunkt-Krafthebers ausgebildet sein. Unter einer Anhängevorrichtung im Sinne der Erfindung ist jede Vorrichtung zur Aufnahme eines Anbaugerätes, Anhängers oder Arbeitsgerätes zu verstehen. Dies kann beispielsweise eine Bolzenkupplung, ein Zughaken, ein Zugpendel oder eine Kugelkopfkupplung sein.

Im Gegensatz zur erfindungsgemäßen Anordnung der Kamera ist die gemäß der DE 10 2019 201 572 A1 ortsfest am Kameraträger angeordnete Kamera des Kamerasystems stets im Sichtfeld des Fahrers, wenn dieser sich umdreht, um aus der Heckscheibe zu blicken. Des Weiteren beschränken der Kameraträger und die daran angeordnete Kamera das Öffnen der Heckscheibe. Auch dieser Nachteil des Standes der Technik wird durch die erfindungsgemäße Anordnung der Kamera unmittelbar an der Heckscheibe vermieden.

Bevorzugt kann die zumindest eine Kamera an der Innenseite der Heckscheibe angeordnet sein. D.h. die Kamera ist an der dem Kabineninneren zugewandten Seite der Heckscheibe angeordnet. Hierdurch wird die Kamera vor äußeren Einflüssen geschützt. Insbesondere ist keine gesonderte Kapselung notwendig, um die Kamera vor Feuchtigkeit zu schützen, wie es bei einer Anordnung außerhalb der Kabine notwendig ist. Die Kosten für die Anordnung und Ausführung der Kamera können somit reduziert werden.

Insbesondere kann die Schwenkbewegung der Heckscheibe durch zumindest ein, insbesondere einstellbares, Begrenzungsmittel beschränkt sein. Dabei kann im einfachsten Fall ein Rahmenelement der Kabine oder zumindest ein am Rahmenelement angeordnetes elastisches Dämpfungselement als Anschlag dienen. Hierbei kann der Abstand des Dämpfungselementes zum Rahmenelement veränderbar sein. Ein Begrenzungsmittel kann beispielsweise auch zumindest eine Gasdruckfeder sein, welche das Ausschwenken der Heckscheibe unterstützt und zugleich den Verstellweg begrenzt. Vorzugsweise können zwei Gasdruckfedern vorgesehen sein, die an vertikalen Rahmenelementen der Kabine und der Heckscheibe angeordnet sind. Das zumindest eine, insbesondere einstellbare, Begrenzungsmittel ermöglicht es, eine definierte Endstellung der Heckscheibe vorzugeben.

Besonders vorteilhaft ist es, wenn die zumindest eine Kamera mit ihrer Bildachse in geöffneter Stellung der Heckscheibe nahezu senkrecht zur Anbauvorrichtung ausgerichtet ist. Auf diese Weise kann dem Fahrer eine Draufsicht auf die Anbauvorrichtung bereitgestellt werden, wodurch die Überwachung des Verbindungsvorganges, insbesondere des Bewegungsablaufs bei der Annäherung von Kuppelelementen der Anbauvorrichtung des Arbeitsfahrzeugs an korrespondierende Kuppelelemente des Anbaugerätes, vereinfacht wird. Hierbei kann insbesondere das zumindest eine einstellbare Begrenzungsmittel dazu dienen, die nahezu senkrechte Ausrichtung der Kamera zur Anbauvorrichtung einzustellen bzw. erforderlichenfalls nachzujustieren. Hierzu kann die Kamera um eine zur Schwenkachse der Heckscheibe achsparallele Achse schwenkbar an der Heckscheibe angeordnet sein. Durch die schwenkbare Anordnung der Kamera kann die Bildachse und damit die Lage des Bilderfassungsbereiches nachjustiert werden.

Gemäß einer bevorzugten Weiterbildung kann die zumindest eine Kamera als 2D-Kamera oder als 3D-Kamera ausgeführt sein. Insbesondere die Ausführung als der Kamera als 3D-Kamera bzw. Stereokamera hat den Vorteil, dass auch die Höhe der Kuppelelemente mittels der zumindest einen Kamera bestimmt werden kann.

Gemäß einer vorteilhaften Weiterbildung kann die Steuereinheit dazu eingerichtet sein, die zumindest eine Kamera durch das Öffnen der Heckscheibe einzuschalten und durch das Schließen der Heckscheibe auszuschalten. Hierdurch lässt sich das Ein- und Ausschalten der zumindest einen Kamera automatisieren.

Insbesondere kann das Kamerasystem eine in der Kabine angeordnete Anzeigevorrichtung umfassen, wobei die Steuereinheit des Kamerasystems dazu eingerichtet ist, die Anzeigevorrichtung anzusteuern, um von der zumindest einen an der Heckscheibe angeordneten Kamera empfangene Bilder anzuzeigen. Dies ermöglicht es dem Fahrer, sich nach dem Öffnen der Heckscheibe wieder in Fahrtrichtung zu wenden, so dass der Fahrer beim Vorgang des Verbindens des Arbeitsfahrzeugs mit dem Arbeitsgerät den Bedienelementen des Arbeitsfahrzeugs, wie dem Lenkrad sowie Bedienelementen zur Betätigung der Anbauvorrichtung, zugewandt agieren kann. Dies ist für den Fahrer ergonomischer und erhöht zudem die Bediensicherheit.

Bevorzugt kann die Steuereinheit dazu eingerichtet sein, die Anzeigevorrichtung anzusteuern, die von der zumindest einen an der Heckscheibe angeordneten Kamera empfangenen Bilder in Abhängigkeit vom Passieren eines Grenzwertes für einen Schwenkwinkel der Heckscheibe oder einen Abstandswert der Heckscheibe zu einem Rahmenelement der Kabine anzuzeigen. Die Ansteuerung der Anzeigevorrichtung kann somit an den Öffnungsgrad der Heckscheibe gebunden sein. Damit kann vermieden werden, dass ein bereits nur teilweises Öffnen der Heckscheibe, beispielsweise zum Lüften der Kabine, dazu führt, dass die Anzeigevorrichtung auf die Darstellung der Bilder der Kamera umgeschaltet wird.

Besonders vorteilhaft ist es, wenn die Steuereinheit dazu eingerichtet ist, die Anzeigevorrichtung anzusteuern, nach dem Schließen der Heckscheibe auf eine vor dem Öffnen der Heckscheibe dargestellte Anzeige zurückzuspringen und/oder empfangene Bilder einer weiteren Kamera des Kamerasystems anzuzeigen. Somit kann dem Fahrer die Anzeige eines vorangegangenen Betriebs- oder Arbeitsvorganges dargestellt werden, welche diesem vor dem Verbindungsvorgang dargestellt wurde, ohne diese Anzeige erneut anwählen zu müssen. Alternativ oder zusätzlich kann die Anzeigevorrichtung angesteuert werden, empfangene Bilder einer weiteren Kamera des Kamerasystems darzustellen.

Gemäß einer Weiterbildung kann die Steuereinheit des Kamerasystems dazu eingerichtet sein, die Anzeigevorrichtung in Abhängigkeit von der Art des mit dem Arbeitsfahrzeug verbundenen Arbeitsgerätes anzusteuern, um nach dem Schließen der Heckscheibe in eine für die Einstellung und/oder den Betrieb des Arbeitsgerätes spezifische Bedienungsanzeige zu wechseln. Hierdurch kann der Bedienkomfort erhöht werden. Hierzu kann die Steuereinheit beispielsweise über ein Bussystem des Arbeitsfahrzeugs und /oder des Arbeitsgerätes eine Information über das Arbeitsgerät erhalten, um eine entsprechende Ansteuerung vorzunehmen. Diese Information kann beispielsweise von einer Steuerungsvorrichtung der landwirtschaftlichen Arbeitsmaschine und/oder einer des Arbeitsgerätes bereitgestellt werden.

Insbesondere kann an der Heckscheibe ein Betätigungsmittel zum Entriegeln und Verriegeln der Heckscheibe angeordnet sein, wobei zur Erfassung des Öffnens und Schlie-ßens der Heckscheibe zumindest ein Sensor vorgesehen ist, der signaltechnisch mit dem Kamerasystem verbunden ist. Das Betätigungsmittel kann einen Handgriff sowie ein mittels des Handgriffes um eine Achse schwenkbares Verriegelungselement umfassen. Das Verriegelungselement ist mit einem Rahmenelement, an dem die Heckscheibe in geschlossener Stellung anliegt, in Eingriff bringbar.

Vorzugsweise kann der zumindest eine Sensor als ein Kontaktsensor und/oder Näherungssensor ausgeführt sein. Auf diese Weise lässt sich das Öffnen und Schließen der Heckscheibe erfassen und ein entsprechendes Signal an die Steuereinheit zur Auswertung übermitteln, um sowohl die an der Heckscheibe angeordnete Kamera als auch die Anzeigevorrichtung entsprechend anzusteuern. Mittels des als Näherungssensor ausgeführten Sensors lässt sich das Passieren eines Grenzwertes für den Abstandswert der Heckscheibe zum Kabinenrahmen bestimmen.

Alternativ oder zusätzlich kann der zumindest eine Sensor als ein Drehsensor zur Erfassung des Schwenkens der Heckscheibe ausgeführt sein. Mittels des Drehsensors lässt sich das Passieren eines Grenzwertes für einen Schwenkwinkel der Heckscheibe bestimmen. Somit kann die Anzeigevorrichtung durch die Steuereinheit gezielter angesteuert werden. Das Umschalten der Anzeige auf die Darstellung der von der zumindest einen an der Heckscheibe angeordneten Kamera empfangenen Bilder kann somit lediglich dann erfolgen, wenn die Betriebssituation des Verbindens von Arbeitsfahrzeug und Arbeitsgerät vorliegt. Auf diese Weise kann zwischen einem nur teilweisen Ausstellen der Heckscheibe und dem vollständigen Öffnen unterschieden werden.

Weiterhin kann am Kabinendach der Kabine zumindest eine weitere Kamera angeordnet sein, die unabhängig von der Kamera an der Heckscheibe den rückwärtigen Bereich des Arbeitsfahrzeuges erfasst. Mittels der weiteren Kamera kann beispielsweise die Art oder der Typ des Arbeitsgerätes identifiziert werden. Zudem dient die weitere Kamera der Überwachung des rückwärtigen Bereichs des Arbeitsfahrzeugs und des mit dem Arbeitsfahrzeug verbundenen Arbeitsgeräts.

Die vorliegende Erfindung wird nachstehend anhand eines in den Zeichnungen dargestellten Ausführungsbeispieles näher erläutert.

Es zeigen:
- Fig. 1: schematisch eine perspektivische Ansicht eines als Traktor ausgeführten landwirtschaftlichen Arbeitsfahrzeugs mit einem Kamerasystem;
- Fig. 2: schematisch eine Seitenansicht eines Arbeitsfahrzeugs mit einem Arbeitsgerät, welches durch eine Anbauvorrichtung mit dem Arbeitsfahrzeug verbundenen ist;
- Fig. 3: eine perspektivische Ansicht des Arbeitsfahrzeugs von schräg hinten; und
- Fig. 4: eine Wiedergabe eines von einer Kamera des Kamerasystems empfangenen Bildes auf einer Anzeigevorrichtung des Arbeitsfahrzeugs.

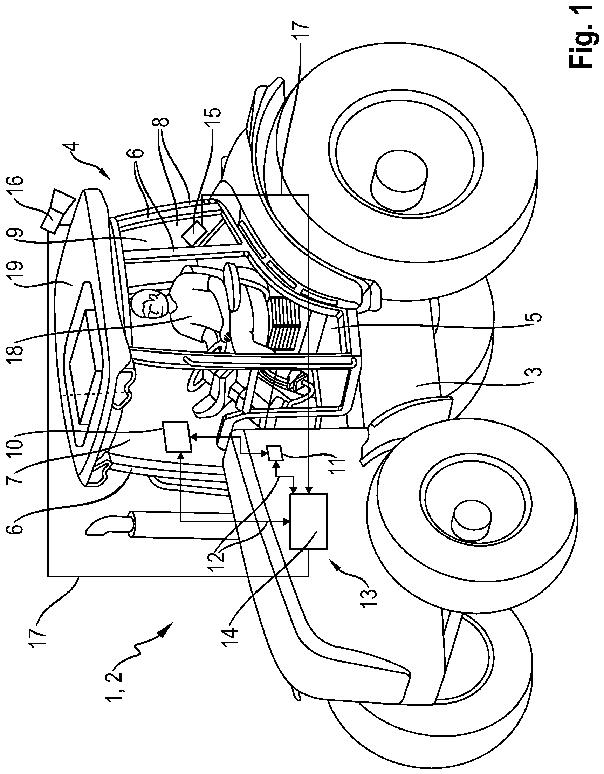

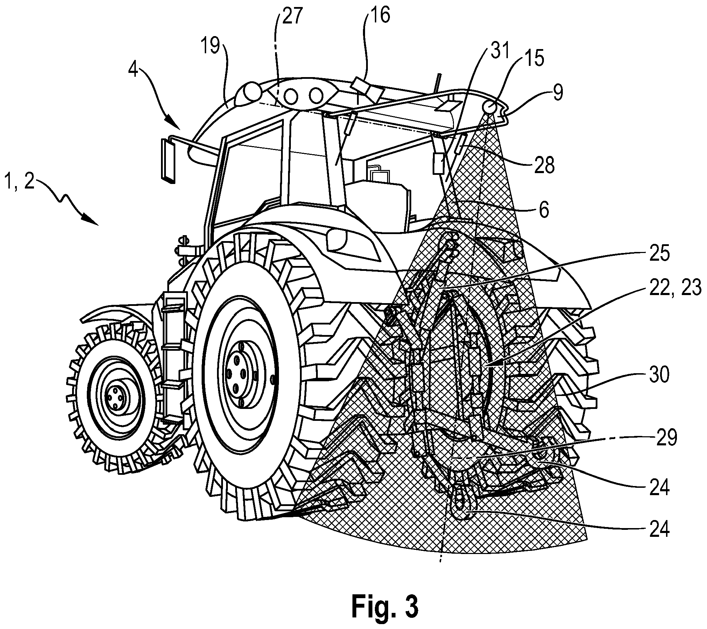

In Fig. 1 ist ein landwirtschaftliches Arbeitsfahrzeug 1 in Form eines Traktors 2 schematisch in perspektivischer Ansicht dargestellt, wobei der grundsätzliche Aufbau eines solchen Traktors als dem Fachmann bekannt angesehen wird. Der Traktor 2 umfasst eine Vielzahl von Karosserieteilen, welche an einem Fahrzeugrahmen 3 angerordnet sind. Zur Aufnahme eines Fahrers 18 ist eine geschlossen ausgeführte Kabine 4 vorgesehen. Die Kabine 4 ist auf dem Fahrzeugrahmen 3 des Traktors 2 angeordnet. Die Kabine 4 umfasst einen Kabinenboden 5, mit welchem sie an dem Fahrzeugrahmen 3 angeordnet ist. Weiterhin umfasst die Fahrerkabine 4 einen Kabinenrahmen mit Rahmenelementen 6, an welchem eine Frontscheibe 7, Seitenscheiben 8 sowie eine der Frontscheibe 7 gegenüberliegende Heckscheibe 9 angebracht sind. Die Heckscheibe 9 ist durch Schwenken um eine parallel zum Kabinendach 19 verlaufende Schwenkachse 27 (vergleiche Fig. 3) aus einer geschlossenen Stellung in eine geöffnete Stellung überführbar und umgekehrt. In der geöffneten Stellung der Heckscheibe 9 erstreckt sich die Heckscheibe 9 im Wesentlichen parallel zum Kabinendach 19. In der geschlossenen Stellung der Heckscheibe 9 erstreckt sich die Heckscheibe 9 im Wesentlichen senkrecht zum Kabinendach 19 und liegt an den Rahmenelementen 6 an.

Innerhalb der Fahrerkabine 4 ist üblicherweise eine Anzeigevorrichtung 10 angeordnet. Die Anzeigevorrichtung 10 kann Eingabe- und Ausgabemittel zur Interaktion des Fahrers 18 mit einer als Bedien- und Steuersystem ausgeführten Steuerungsvorrichtung 11 zur Bedienung und Steuerung des landwirtschaftlichen Arbeitsfahrzeugs 1 respektive des Traktors 2 aufweisen. Hierzu kann die Anzeigevorrichtung 10 als berührungssensitive Anzeige ausgeführt sein oder zusätzliche Eingabemittel wie eine Tastatur, einen Multifunktionsgriff, Taster und Schalter oder dergleichen aufweisen. Die Steuerungsvorrichtung 11 steht durch ein Bussystem 12 mit der Anzeigevorrichtung 10 in Verbindung. Die Steuerungsvorrichtung 11 ist Teil einer Einrichtung zur Steuerung und Überwachung von unterschiedlichen Arbeitseinstellungen des Traktors 2. Dazu ist die Steuerungsvorrichtung 11 auf für sich gesehen bekannte Weise mit Arbeitsaggregaten, Sensoren und Bedieneinrichtungen des Traktors 2 verbunden, die hier nicht näher dargestellt sind.

Der Traktor 2 umfasst weiterhin ein Kamerasystem 13 mit einer Steuereinheit 14 sowie zumindest einer Kamera 15. Die zumindest eine Kamera 15 ist an der Heckscheibe 9 angeordnet und zur fortlaufenden Aufnahme von Bildern 32 eingerichtet. Insbesondere ist die zumindest eine Kamera 15 an der Innenseite der Heckscheibe 9 angeordnet. Hierdurch ist die Kamera 15 vor Witterungseinflüssen geschützt, wodurch der Aufwand für die Ausgestaltung des Kameragehäuses zur Einkapslung reduziert wird. Die Kamera 15 ist durch ein drahtloses oder drahtgebundenes Kommunikationsmittel 17 mit der Steuereinheit 14 verbunden. Die zumindest eine Kamera 15 kann als 2D-Kamera oder als 3D-Kamera ausgeführt sein. Zudem kann das Kamerasystem 13 eine weitere Kamera 16 umfassen, welche, dem Heckbereich des Traktor 2 zugewandt, auf dem Kabinendach 19 angeordnet ist. Die weitere Kamera 16 kann unabhängig von der Kamera 15 an der Heckscheibe 9 den rückwärtigen Bereich des Arbeitsfahrzeuges 1 erfassen. Die Steuereinheit 14 kann durch das Bussystem 12 mit der Steuerungsvorrichtung 11 des Traktors 2 in Verbindung stehen.

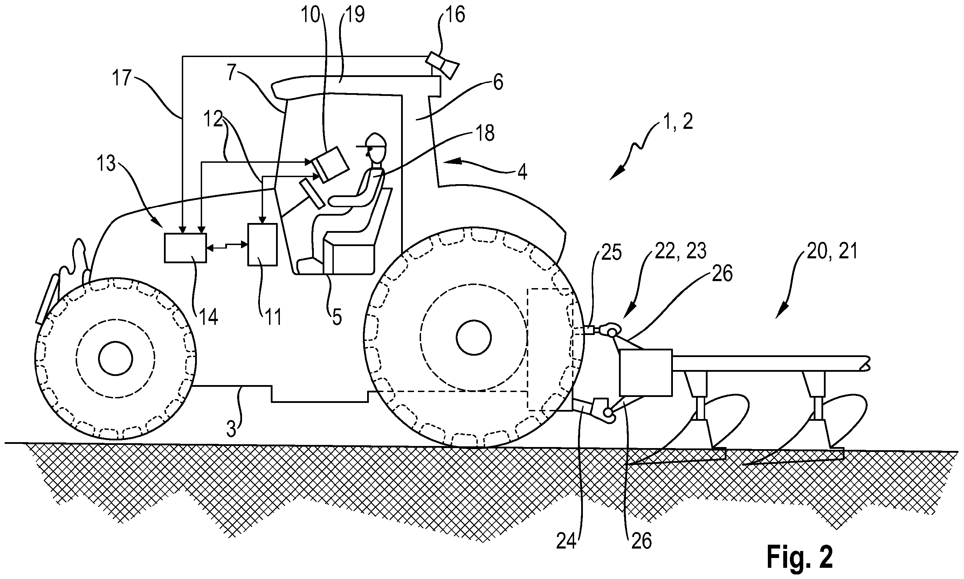

In Fig. 2 ist schematisch eine Seitenansicht des Arbeitsfahrzeugs 1 mit einem Arbeitsgerät 20, welches durch eine Anbauvorrichtung 22 mit dem Arbeitsfahrzeug 1 verbunden ist, dargestellt. Die Anbauvorrichtung 22 ist im dargestellten Ausführungsbeispiel als ein Dreipunkt-Heckkraftheber 23 ausgeführt. Für die Verbindung bzw. Kopplung mit dem Arbeitsgerät 20 weist der Dreipunkt-Heckkraftheber 23 zwei Unterlenker 24 und einen Oberlenker 25 als Koppelelemente auf. An dem Arbeitsgerät 20 sind korrespondierende Koppelelemente 26 angeordnet, die mit den Unterlenkern 24 und dem Oberlenker 25 in Eingriff bringbar sind, um das Arbeitsgerät 20 anzukoppeln. Das Arbeitsgerät 20 ist lediglich beispielhaft als ein Pflug 21 ausgeführt. Es kommt jedwede Art von Arbeitsgerät 20 in Frage, welches mittels der Anbauvorrichtung 22, die auch als Anhängevorrichtung ausgeführt sein kann, beispielsweise als eine Bolzenkupplung, ein Zughaken, ein Zugpendel oder eine Kugelkopfkupplung, mit dem landwirtschaftlichen Arbeitsfahrzeug 1 respektive dem Traktor 2 verbindbar ist. Dabei kann das Arbeitsgerät 20 über eine eigene Steuerungsvorrichtung zur Steuerung und Überwachung von unterschiedlichen Arbeitseinstellungen verfügen.

Die Darstellung in Fig. 3 zeigt eine perspektivische Ansicht des Arbeitsfahrzeugs 1 von schräg hinten. Die Heckscheibe 9 befindet sich in ihrer geöffneten Stellung. Zum Ausstellen sowie zur Begrenzung der Schwenkbewegung der Heckscheibe 9 ist zumindest ein, insbesondere einstellbares, Begrenzungsmittel 28 vorgesehen. Dabei kann im einfachsten Fall ein Rahmenelement 6 der Kabine 4 oder zumindest ein am Kabinenrahmen angeordnetes elastisches Dämpfungselement als Anschlag dienen. Ein Begrenzungsmittel 28 kann auch eine Gasdruckfeder sein, welche das Ausschwenken der Heckscheibe 9 unterstützt und zugleich den Verstellweg begrenzt. Vorzugsweise können zwei als Gasdruckfedern ausgeführt Begrenzungsmittel 28 vorgesehen sein, die an vertikalen Rahmenelementen 6 der Kabine 4 und der Heckscheibe 9 angeordnet sind. Die Begrenzungsmittel 28 können einstellbar ausgeführt sein, wodurch eine Justage der Endanschlagposition der Heckscheibe 9 durchgeführt werden kann.

Die an der Innenseite der Heckscheibe 9 angeordnete Kamera 15 ist derart positioniert, dass die Kamera 15 in der dargestellten geöffneten Stellung der Heckscheibe 9 auf die Anbauvorrichtung 22, 23 ausgerichtet ist. Die Anordnung an der Innenseite der Heckscheibe 9 hat den weiteren Vorteil, dass die Sicht des Objektivs der Kamera 15 nicht durch die Heckscheibe 9 selbst beeinflusst wird, was bei einer Anordnung auf der Außenseite der Heckscheibe 9 der Fall wäre. Mit 29 ist die Bildachse und mit 30 ist der im Wesentlichen kegelförmige Bilderfassungsbereich der Kamera 15 bezeichnet. Erfindungsgemäß ist die Bildachse 29 der Kamera 15 in der geöffneten Stellung der Heckscheibe 9 senkrecht oder nahezu senkrecht zu der Anbauvorrichtung 22, 23 ausgerichtet. Durch die, insbesondere einstellbar ausgeführten, Begrenzungsmittel 28 lässt sich die Stellung der Heckscheibe 9 und mit ihr die der Kamera 15 erforderlichenfalls nachjustieren, damit die Bildachse 29 der Kamera 15 in der geöffneten Stellung der Heckscheibe 9 nahezu senkrecht zu der Anbauvorrichtung 22, 23 ausgerichtet bleibt. Alternativ kann die Kamera 15 um eine zur Schwenkachse 27 der Heckscheibe 9 achsparallele Achse schwenkbar an der Heckscheibe 9 angeordnet sein. Durch die schwenkbare Anordnung der Kamera 15 kann die Bildachse 29 und damit die Lage des Bilderfassungsbereiches 30 nachjustiert werden.

An der Heckscheibe 9 ist ein - nicht dargestelltes - Betätigungsmittel zum Entriegeln und Verriegeln der Heckscheibe 9 angeordnet. Dabei kann es sich bei dem Betätigungsmittel um einen Handgriff handeln. Zur Erfassung des Öffnens und Schließens der Heckscheibe 9 ist zumindest ein Sensor 31 vorgesehen ist, der signaltechnisch durch das Kommunikationsmittel 17 mit der Steuereinheit 14 des Kamerasystems 13 verbunden ist.

Der zumindest eine Sensor 31 kann als ein Kontaktsensor und/oder Näherungssensor ausgeführt sein. Auf diese Weise lässt sich bestimmen, ob die Heckscheibe 9 zum Öffnen ausgeschwenkt oder zum Schließen eingeschwenkt wird. Denkbar ist auch, dass der zumindest eine Sensor 31 als ein Drehsensor zur Erfassung des Schwenkens der Heckscheibe 9 um die Schwenkachse 27 ausgeführt ist. Mittels des zumindest einen Sensors 31 lässt sich zum einen das Öffnen und Schließen der Heckscheibe 9 detektieren. Da das Öffnen der Heckscheibe 9 mitunter auch dazu dienen kann, die Kabine 4 zu lüften und die Heckscheibe 9 zu diesem Zweck nur partiell ausgeschwenkt werden kann, ist es sinnvoll, erkennen zu können, in welcher Stellung sich die ausgeschwenkte Heckscheibe 9 befindet. Dies lässt sich durch eine Auswertung der Signale, die mittels des als Näherungssensor oder Drehsensor ausgeführten Sensors 31 bereitgestellt werden, durch die Steuereinheit 14 erreichen.

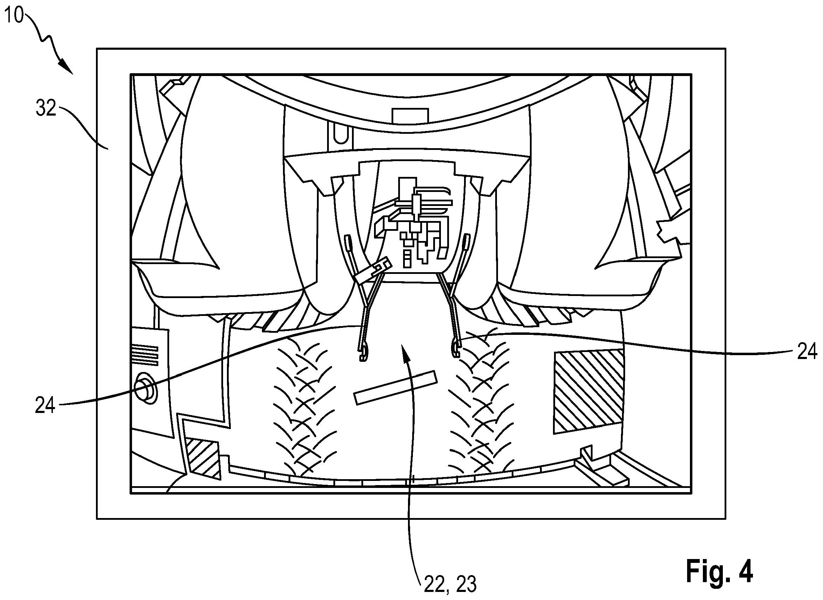

Die Steuereinheit 14 ist dazu eingerichtet, das Öffnen und Schließen der Heckscheibe 9 zu detektieren und die zumindest eine Kamera 15 durch das Öffnen der Heckscheibe 9 einzuschalten und durch das Schließen der Heckscheibe 9 auszuschalten. Die Steuereinheit 14 ist dazu eingerichtet, die mit der Steuereinheit 14 in Verbindung stehende Anzeigevorrichtung 10 anzusteuern, um die von der zumindest einen an der Heckscheibe 9 angeordneten Kamera 15 empfangenen Bilder 32 anzuzeigen, wie beispielhaft in Fig. 4 dargestellt.

Dazu kann die Steuereinheit 14 dazu eingerichtet sein, die Anzeigevorrichtung 10 anzusteuern, die von der zumindest einen an der Heckscheibe 9 angeordneten Kamera 15 empfangenen Bilder 32 in Abhängigkeit vom Passieren eines Grenzwertes für einen Schwenkwinkel der Heckscheibe 9 oder eines Abstandswertes der Heckscheibe 9 zum Rahmen der Kabine 4 anzuzeigen. Somit führt ein lediglich partielles Ausschwenken der Heckscheibe 9 nicht dazu, dass die Anzeigevorrichtung 10 umschaltet, um von der Kamera 15 empfangene Bilder 32 anzeigt. Ebenso wird die Kamera 15 bei einem nur partiellen Ausschwenken der Heckscheibe 9 nicht aktiviert.

Des Weiteren kann die Steuereinheit 14 dazu eingerichtet sein, die Anzeigevorrichtung 10 anzusteuern, nach dem Schließen der Heckscheibe 9 auf eine vor dem Öffnen der Heckscheibe 9 von der Anzeigevorrichtung 10 dargestellte Anzeige zurückzuspringen und/oder empfangene Bilder der weiteren am Kabinendach 19 angeordneten Kamera 16 des Kamerasystems 13 anzuzeigen. Dies kann durch die unmittelbare Ansteuerung der Anzeigevorrichtung 10 durch die Steuereinheit 14 geschehen oder mittelbar durch die Steuerungsvorrichtung 11. Im letzteren Fall kann die Steuereinheit 14 ein Statussignal an die Steuerungsvorrichtung 11 übermitteln, welches die Information über die Abschaltung der Kamera 15 enthält. Die Steuerungsvorrichtung 11 steuert daraufhin in Abhängigkeit von diesem Statussignal die Anzeigevorrichtung 10 an.

Weiterhin kann die Steuereinheit 14 dazu eingerichtet sein, die Anzeigevorrichtung 10 in Abhängigkeit von der Art des mit dem Arbeitsfahrzeug 1 verbundenen Arbeitsgerätes 20 anzusteuern, um nach dem Schließen der Heckscheibe 9 in eine für die Einstellung des Arbeitsgerätes 20 spezifische Bedienungsanzeige zu wechseln. D.h. nach dem Verbinden des Arbeitsgerätes 20 mit dem Arbeitsfahrzeug 1 schließt der Fahrer 18 die Heckscheibe 9 üblicherweise, was durch den zumindest einen Sensor 31 detektiert wird. Lässt sich die Art des angekoppelten Anbaugeräts 20 durch die Steuerungsvorrichtung 11 identifizieren, so kann diese ein entsprechendes Signal an die Steuereinheit 14 übermitteln, welche daraufhin die Anzeigevorrichtung 10 ansteuert, um die für die Einstellung des Arbeitsgerätes 20 spezifische Bedienungsanzeige anzuzeigen.

Die Darstellung in Fig. 4 zeigt eine Wiedergabe eines von der Kamera 15 des Kamerasystems 13 empfangenen einzelnen Bildes 32 auf der Anzeigevorrichtung 10 des Arbeitsfahrzeugs 1 bzw. des Traktors 2. Das von der Kamera 15 empfangene Bild 32 zeigt die Anbauvorrichtung 22, 23 in einer Draufsicht. Nähert sich der Traktor 2 dem anzukoppelnden Arbeitsgerät 20 an, so gelangen die Koppelelemente 26 des Arbeitsgerätes 20, 21 ebenfalls in den Bilderfassungsbereich 30 der Kamera 15 und würden, im Rahmen der von der Kamera 15 empfangenen Bildfolge, entsprechend in Draufsicht dargestellt, wodurch der Vorgang des Verbindens von Arbeitsfahrzeug 1 und Anbaugerät 20 vereinfacht wird.

**Bezugszeichenliste**

| | | | |
|---|---|---|---|
| 1 | Arbeitsfahrzeug | 31 | Sensor |
| 2 | Traktor | 32 | Bild |
| 3 | Fahrzeugrahmen | | |
| 4 | Kabine | | |
| 5 | Kabinenboden | | |
| 6 | Rahmenelement | | |
| 7 | Frontscheibe | | |
| 8 | Seitenscheibe | | |
| 9 | Heckscheibe | | |
| 10 | Anzeigevorrichtung | | |
| 11 | Steuerungsvorrichtung | | |
| 12 | Bussystem | | |
| 13 | Kamerasystem | | |
| 14 | Steuereinheit | | |
| 15 | Kamera | | |
| 16 | Kamera | | |
| 17 | Kommunikationsmittel | | |
| 18 | Fahrer | | |
| 19 | Kabinendach | | |
| 20 | Arbeitsgerät | | |
| 21 | Pflug | | |
| 22 | Anbauvorrichtung | | |
| 23 | Dreipunkt-Heckkraftheber | | |
| 24 | Unterlenker | | |
| 25 | Oberlenker | | |
| 26 | Koppelelement | | |
| 27 | Schwenkachse | | |
| 28 | Begrenzungsmittel | | |
| 29 | Bildachse | | |
| 30 | Bilderfassungsbereich | | |

## Patentansprüche

1. Landwirtschaftliches Arbeitsfahrzeug (1), insbesondere Traktor (2), umfassend
- eine Kabine (4), welche eine Frontscheibe (7) und eine der Frontscheibe (7) gegenüberliegende, ausstellbare Heckscheibe (9) aufweist, welche durch Schwenken um eine Schwenkachse (27) aus einer geschlossenen Stellung in eine geöffnete Stellung überführbar ist,
- eine Anbauvorrichtung (22, 23) zum Verbinden eines Arbeitsgerätes (20, 21) mit dem Arbeitsfahrzeug (1, 2), sowie
- ein Kamerasystem (13) mit einer Steuereinheit (14), welches zur Überwachung des Verbindungsvorganges eingerichtet ist,
wobei das Kamerasystem (13) zumindest eine Kamera (15) umfasst,
**dadurch gekennzeichnet, dass** die zumindest eine Kamera an der Heckscheibe (9) angeordnet ist, und dass die an der Heckscheibe (9) angeordnete Kamera (15) bei geöffneter Heckscheibe (9) auf die Anbauvorrichtung (22, 23) ausgerichtet ist.

2. Landwirtschaftliches Arbeitsfahrzeug (1, 2) nach Anspruch 1, **dadurch gekennzeichnet, dass** die zumindest eine Kamera (15) an der Innenseite der Heckscheibe (9) angeordnet ist.

3. Landwirtschaftliches Arbeitsfahrzeug (1, 2) nach Anspruch 1 oder 2, **dadurch gekennzeichnet, dass** die Schwenkbewegung der Heckscheibe (9) durch zumindest ein Begrenzungsmittel (28) beschränkt ist.

4. Landwirtschaftliches Arbeitsfahrzeug (1, 2) nach einem der Ansprüche 1 bis 3, **dadurch gekennzeichnet, dass** die zumindest eine Kamera (15) mit ihrer Bildachse (29) in geöffneter Stellung der Heckscheibe (9) nahezu senkrecht zur Anbauvorrichtung (22, 23) ausgerichtet ist.

5. Landwirtschaftliches Arbeitsfahrzeug (1, 2) nach einem der vorangehenden Ansprüche, **dadurch gekennzeichnet, dass** die zumindest eine Kamera (15) als 2D-Kamera oder als 3D-Kamera ausgeführt ist.

6. Landwirtschaftliches Arbeitsfahrzeug (1, 2) nach einem der vorangehenden Ansprüche, **dadurch gekennzeichnet, dass** die Steuereinheit (14) dazu eingerichtet ist, die zumindest eine Kamera (15) durch das Öffnen der Heckscheibe (9) einzuschalten und durch das Schließen der Heckscheibe (9) auszuschalten.

7. Landwirtschaftliches Arbeitsfahrzeug (1, 2) nach einem der vorangehenden Ansprüche, **dadurch gekennzeichnet, dass** das Kamerasystem (13) eine in der Kabine (4) angeordnete Anzeigevorrichtung (10) umfasst, welche mit der Steuereinheit (14) in Verbindung steht, wobei die Steuereinheit (14) dazu eingerichtet ist, die Anzeigevorrichtung (10) anzusteuern, um von der zumindest einen an der Heckscheibe (9) angeordneten Kamera (15) empfangene Bilder (32) anzuzeigen.

8. Landwirtschaftliches Arbeitsfahrzeug (1, 2) nach Anspruch 7, **dadurch gekennzeichnet, dass** die Steuereinheit (14) dazu eingerichtet ist, die Anzeigevorrichtung (10) anzusteuern, die von der zumindest einen an der Heckscheibe (9) angeordneten Kamera (15) empfangenen Bilder (32) in Abhängigkeit vom Passieren eines Grenzwertes für einen Schwenkwinkels der Heckscheibe (9) oder einen Abstandswert der Heckscheibe (9) zu einem Rahmenelement (6) der Kabine (4) anzuzeigen.

9. Landwirtschaftliches Arbeitsfahrzeug (1, 2) nach Anspruch 7 oder 8, **dadurch gekennzeichnet, dass** die Steuereinheit (14) dazu eingerichtet ist, die Anzeigevorrichtung (10) anzusteuern, nach dem Schließen der Heckscheibe (9) auf eine vor dem Öffnen der Heckscheibe (9) dargestellte Anzeige zurückzuspringen und/oder empfangene Bilder einer weiteren Kamera (16) des Kamerasystems (13) anzuzeigen.

10. Landwirtschaftliches Arbeitsfahrzeug (1, 2) nach einem der Ansprüche 7 bis 9, **dadurch gekennzeichnet, dass** die Steuereinheit (14) dazu eingerichtet ist, die Anzeigevorrichtung (10) in Abhängigkeit von der Art des mit dem Arbeitsfahrzeug (1, 2) verbundenen Arbeitsgerätes (20, 21) anzusteuern, dass die Anzeigevorrichtung (10) nach dem Schließen der Heckscheibe (9) in eine für die Einstellung und/oder den Betrieb des Arbeitsgerätes (20, 21) spezifische Bedienungsanzeige zu wechseln.

11. Landwirtschaftliches Arbeitsfahrzeug (1, 2) nach einem der vorangehenden Ansprüche, **dadurch gekennzeichnet, dass** an der Heckscheibe (9) ein Betätigungsmittel zum Entriegeln und Verriegeln der Heckscheibe (9) angeordnet ist, wobei zur Erfassung des Öffnens und Schließens der Heckscheibe (9) zumindest ein Sensor (31) vorgesehen ist, der signaltechnisch mit der Steuereinheit (14) des Kamerasystems (13) verbunden ist.

12. Landwirtschaftliches Arbeitsfahrzeug (1, 2) nach Anspruch 11, **dadurch gekennzeichnet, dass** der zumindest eine Sensor (31) als ein Kontaktsensor und/oder Näherungssensor ausgeführt ist.

13. Landwirtschaftliches Arbeitsfahrzeug (1, 2) nach Anspruch 11 oder 12, **dadurch gekennzeichnet, dass** der zumindest eine Sensor (31) als ein Drehsensor zur Erfassung des Schwenkens der Heckscheibe (9) ausgeführt ist.

14. Landwirtschaftliches Arbeitsfahrzeug (1, 2) nach einem der vorangehenden Ansprüche, **dadurch gekennzeichnet, dass** am Kabinendach (19) der Kabine (4) zumindest eine weitere Kamera (16) angeordnet ist, die unabhängig von der Kamera (15) an der Heckscheibe (9) den rückwärtigen Bereich des Arbeitsfahrzeuges (1, 2) erfasst.

## Claims

1. An agricultural working vehicle (1), in particular a tractor (2), comprising
- a cabin (4) which has a front window (7) and an opposite, openable rear window (9) which can be transposed from a closed position into an open position by pivoting about a pivot axis (27),
- an attaching device (22, 23) for connecting an implement (20, 21) to the working vehicle (1, 2), as well as
- a camera system (13) with a control unit (14) which is configured to monitor the connection procedure,
wherein the camera system (13) comprises at least one camera (15),
**characterized in that** the at least one camera is disposed on the rear window (9), and **in that** the camera disposed on the rear window (9) is orientated onto the attaching device (22, 23) when the rear window (9) is open.

2. The agricultural working vehicle (1, 2) according to claim 1, **characterized in that** the at least one camera (15) is disposed on the inside of the rear window (9).

3. The agricultural working vehicle (1, 2) according to claim 1 or claim 2, **characterized in that** the pivotal movement of the rear window (9) is limited by means of at least one limiting means (28).

4. The agricultural working vehicle (1, 2) according to one of claims 1 to 3, **characterized in that** in the open position of the rear window (9), the at least one camera (15) is orientated with its image axis (29) almost perpendicular to the attaching device (22, 23).

5. The agricultural working vehicle (1, 2) according to one of the preceding claims, **characterized in that** the at least one camera (15) is configured as a 2D camera or as a 3D camera.

6. The agricultural working vehicle (1, 2) according to one of the preceding claims, **characterized in that** the control unit (14) is configured to switch on the at least one camera (15) by opening the rear window (9) and to switch it off by closing the rear window (9).

7. The agricultural working vehicle (1, 2) according to one of the preceding claims, **characterized in that** the camera system (13) comprises a display device (10) disposed in the cabin (4) which is connected to the control unit (14), wherein the control unit (14) is configured to control the display device (10) in order to display on it images (32) received from the at least one camera (15) disposed on the rear window (9).

8. The agricultural working vehicle (1, 2) according to claim 7, **characterized in that** the control unit (14) is configured to control the display device (10) to display on it the images (32) received from the at least one camera (15) disposed on the rear window (9) as a function of passing a threshold value for a pivot angle of the rear window (9) or a value for the distance from the rear window (9) to a frame element (6) of the cabin (4).

9. The agricultural working vehicle (1, 2) according to claim 7 or claim 8, **characterized in that** the control unit (14) is configured to control the display device (10) to return to a display shown prior to opening the rear window (9) after the rear window (9) is closed, and/or to display images received from a further camera (16) of the camera system (13).

10. The agricultural working vehicle (1, 2) according to one of claims 7 to 9, **characterized in that** the control unit (14) is configured to control the display device (10) as a function of the type of implement (20, 21) connected to the working vehicle (1, 2) in order to change to an operating display which is specific to the setting of and/or to the operation of the implement (20, 21) after closing the rear window (9).

11. The agricultural working vehicle (1, 2) according to one of the preceding claims, **characterized in that** an actuating means for unlocking and locking the rear window (9) is disposed on the rear window (9), wherein at least one sensor (31) is provided in order to detect opening and closing of the rear window (9) and which is connected for the purposes of signalling to the control unit (14) of the camera system (13).

12. The agricultural working vehicle (1, 2) according to claim 11, **characterized in that** the at least one sensor (31) is configured as a contact sensor and/or a proximity sensor.

13. The agricultural working vehicle (1, 2) according to claim 11 or claim 12, **characterized in that** the at least one sensor (31) is configured as a rotational sensor in order to detect the pivoting of the rear window (9).

14. The agricultural working vehicle (1, 2) according to one of the preceding claims, **characterized in that** at least one further camera (16) is disposed on the cabin roof (19) of the cabin (4) which detects the rearwards region of the working vehicle (1, 2) independently of the camera (15) on the rear window (9).

## Revendications

1. Véhicule de travail agricole (1), en particulier tracteur (2), incluant
- une cabine (4) qui comporte une vitre avant (7) et une vitre arrière à projection (9) qui est située en vis-à-vis de la vitre avant (7) et qui peut être transférée d'une position fermée à une position ouverte par pivotement autour d'un axe de pivotement (27),
- un dispositif d'attelage (22, 23) pour relier un outil de travail (20, 21) au véhicule de travail (1, 2) ainsi que
- un système de caméra (13) avec une unité de commande (14), lequel est agencé pour surveiller l'opération de liaison,
le système de caméra (13) incluant au moins une caméra (15),
**caractérisé en ce que** la au moins une caméra est disposée sur la vitre arrière (9), et **en ce que**, lorsque la vitre arrière (9) est ouverte, la caméra (15) disposée sur la vitre arrière (9) est orientée vers le dispositif d'attelage (22, 23).

2. Véhicule de travail agricole (1, 2) selon la revendication 1, **caractérisé en ce que** la au moins une caméra (15) est disposée sur le côté intérieur de la vitre arrière (9).

3. Véhicule de travail agricole (1, 2) selon la revendication 1 ou 2, **caractérisé en ce que** le mouvement pivotant de la vitre arrière (9) est limité par au moins un moyen de limitation (28).

4. Véhicule de travail agricole (1, 2) selon une des revendications 1 à 3, **caractérisé en ce que**, lorsque la vitre arrière (9) est ouverte, la au moins une caméra (15) est orientée avec son axe d'image (29) presque verticalement par rapport au dispositif d'attelage (22, 23).

5. Véhicule de travail agricole (1, 2) selon une des revendications précédentes, **caractérisé en ce que** la au moins une caméra (15) est conformée en caméra 2D ou en caméra 3D.

6. Véhicule de travail agricole (1, 2) selon une des revendications précédentes, **caractérisé en ce que** l'unité de commande (14) est agencée pour mettre la au moins une caméra (15) sous tension lors de l'ouverture de la vitre arrière (9) et pour la mettre hors tension lors de la fermeture de la vitre arrière (9).

7. Véhicule de travail agricole (1, 2) selon une des revendications précédentes, **caractérisé en ce que** le système de caméra (13) inclut un dispositif d'affichage (10) qui est disposé dans la cabine (4) et qui est en liaison avec l'unité de commande (14), l'unité de commande (14) étant agencée pour commander le dispositif d'affichage (10) afin d'afficher des images (32) reçues de la au moins une caméra (15) disposée sur la vitre arrière (9).

8. Véhicule de travail agricole (1, 2) selon la revendication 7, **caractérisé en ce que** l'unité de commande (14) est agencée pour commander le dispositif d'affichage (10) afin d'afficher les images (32) reçues de la au moins une caméra (15) disposée sur la vitre arrière (9) en fonction du dépassement d'une valeur limite pour un angle de pivotement de la vitre arrière (9) ou pour une valeur d'écartement de la vitre arrière (9) par rapport à un élément de bâti (6) de la cabine (4).

9. Véhicule de travail agricole (1, 2) selon la revendication 7 ou 8, **caractérisé en ce que** l'unité de commande (14) est agencée pour commander le dispositif d'affichage (10) afin de revenir, après la fermeture de la vitre arrière (9), à un affichage présenté avant l'ouverture de la vitre arrière (9) et/ou afin d'afficher des images reçues d'une autre caméra (16) du système de caméra (13).

10. Véhicule de travail agricole (1, 2) selon une des revendications 7 à 9, **caractérisé en ce que** l'unité de commande (14) est agencée pour commander le dispositif d'affichage (10) en fonction du type de l'outil de travail (20, 21) relié au véhicule de travail (1, 2), de façon qu'après la fermeture de la vitre arrière (9), le dispositif d'affichage (10) passe sur un affichage opératoire spécifique pour le réglage et/ou le fonctionnement de l'outil de travail (20, 21).

11. Véhicule de travail agricole (1, 2) selon une des revendications précédentes, **caractérisé en ce que** sur la vitre arrière (9) est disposé un moyen d'actionnement pour déverrouiller et verrouiller la vitre arrière (9), pour détecter l'ouverture et la fermeture de la vitre arrière (9) étant prévu au moins un capteur (31) qui, en termes de technique de signaux, est relié à l'unité de commande (14) du système de caméra (13).

12. Véhicule de travail agricole (1, 2) selon la revendication 11, **caractérisé en ce que** le au moins un capteur (31) est conformé en capteur de contact et/ou en capteur de proximité.

13. Véhicule de travail agricole (1, 2) selon la revendication 11 ou 12, **caractérisé en ce que** le au moins un capteur (31) est conformé en capteur de rotation pour détecter le pivotement de la vitre arrière (9).

14. Véhicule de travail agricole (1, 2) selon une des revendications précédentes, **caractérisé en ce que** sur le toit de cabine (19) de la cabine (4) est disposée au moins une autre caméra (16) qui couvre la zone arrière du véhicule de travail (1, 2) indépendamment de la caméra (15) sur la vitre arrière (9).
